# EUROPEAN PATENT APPLICATION

(11) **EP 4 641 780 A1**
(43) Date of publication of application: **29.10.2025**
(21) Application number: 23907102.0
(22) Date of filing: 20.12.2023
(51) Int. Cl.: H01M 50/122, H01M 10/0562, H01M 50/105, H01M 50/117, H01M 50/121, H01M 50/126, H01M 50/145

(54) **EXTERIOR MATERIAL FOR POWER STORAGE DEVICE AND POWER STORAGE DEVICE**

(30) Priority: 21.12.2022 JP 2022204337
(71) Applicant: Toppan Holdings Inc., Tokyo 110-0016 (JP)
(72) Inventor: MURATA, Koji, Tokyo 110-0016 (JP); IMAMOTO, Junya, Tokyo 110-0016 (JP)
(74) Representative: Hoffmann Eitle
(86) International application number: PCT/JP2023/045777
(87) International publication number: WO 2024/135742

(57) **Abstract**

A packaging material for a power storage device includes at least a substrate layer, a barrier layer, an adhesive layer, and a sealant layer in this order. In the packaging material, at least either of the adhesive layer and the sealant layer includes a filler-containing layer that contains a filler containing layered clay minerals. The filler-containing layer may be obtained using a resin composition containing a resin and a filler. Of the adhesive layer and the sealant layer, the adhesive layer may include the filler-containing layer, and the resin in the resin composition may comprise a modified polyolefin resin.

## Description

### [Technical Field]

The present disclosure relates to packaging materials for a power storage device, and power storage devices.

### [Background Art]

Secondary batteries such as lithium-ion batteries are widely used for mobile electronic devices, and electric vehicles, hybrid vehicles, etc. using electric power as a power source. As batteries with improved safety compared to lithium-ion batteries, solid-state lithium batteries are under development, which use inorganic solid electrolytes instead of organic solvent electrolytes. Solid-state lithium batteries are safer than lithium-ion batteries in that they are less susceptible to thermal runaway caused by short circuits and the like.

In solid-state batteries, particularly in solid-state batteries using sulfide-based solid electrolytes, when moisture penetrates, the sulfide-based solid electrolytes react with the moisture to generate hydrogen sulfide. Since hydrogen sulfide is toxic, its generation is required to be suppressed and, if it is generated, detoxification (deodorization) is required to be performed promptly. In order to suppress generation of hydrogen sulfide, it has been considered to add moisture adsorbents such as zeolite, silica gel, and lime to the individual layers of the packaging material. For example, PTL 1 shown below discloses a packaging material using zeolite or the like as a moisture adsorbent.

### [Citation List]

### [Patent Literature]

PTL 1: JP2020-187855A

### [Summary of the Invention]

### [Technical Problem]

However, the packaging material described in PTL 1 has room for improvement in terms of moisture barrier properties.

Therefore, there has been a need for a packaging material capable of improving moisture barrier properties.

Power storage devices other than solid-state batteries are also preferred to use a packaging material capable of improving moisture barrier properties, from the perspective of suppressing deterioration in battery performance due to moisture.

The present disclosure has been made in light of the above issues and aims to provide a packaging material for a power storage device capable of improving moisture barrier properties and to provide a power storage device.

### [Solution to Problems]

In order to achieve this aim, the present disclosure provides a packaging material for a power storage device including at least a substrate layer, a barrier layer, an adhesive layer, and a sealant layer in this order, wherein at least either of the adhesive layer and the sealant layer includes a filler-containing layer that contains a filler containing layered clay minerals.

According to the packaging material, moisture barrier properties can be improved.

The present inventors consider the reasons why the above effects can be obtained to be as follows.

That is, the filler containing layered clay minerals contained in the filler may become flat flakes, each having a thickness of several nanometers, in the filler-containing layer. The flat flakes, which are impervious to water vapor, may be dispersed in the filler-containing layer and may block moisture that has penetrated, creating a labyrinth effect that allows the moisture path to meander, consequently improving the moisture barrier properties of the filler-containing layer.

It is considered that, In the filler-containing layer of the packaging material according to the present disclosure, the filler containing layered clay minerals allows moisture to meander to improve moisture barrier properties, and the moisture barrier properties are less likely to deteriorate due to saturation of moisture adsorption capacity, even with long-term use.

In the packaging material for a power storage device, the filler-containing layer may be obtained using a resin composition containing a resin and the filler.

In the packaging material for a power storage device, of the adhesive layer and the sealant layer, the adhesive layer may include the filler-containing layer, and the resin in the resin composition may comprise a modified polyolefin resin.

In this case, due to the adhesive layer, which is one of the adhesive layer and the sealant layer, including the filler-containing layer, and due to the resin in the resin composition comprising a modified polyolefin resin, adhesion of the adhesive layer to the barrier layer and the sealant layer is further improved.

The resin composition is preferred to further contain a polyfunctional isocyanate compound.

According to the packaging material, due to the resin composition further containing a polyfunctional isocyanate compound, water barrier properties can be further improved, while further improving sealing strength.

The resin composition is preferred to further contain a carbodiimide compound.

According to the packaging material, due to the resin composition further containing a carbodiimide compound, water barrier properties can be further improved, while further improving sealing strength, compared to the case where the resin composition does not contain a carbodiimide compound.

In the packaging material for a power storage device, the layered clay minerals are preferred to contain an organically modified montmorillonite.

According to the packaging material, due to the layered clay minerals containing an organically modified montmorillonite, the layered clay minerals may be well dispersed in the filler-containing layer, and therefore moisture barrier properties may be further improved.

In the packaging material for a power storage device, the organically modified montmorillonite is preferred to comprise a quaternary ammonium-modified montmorillonite.

According to the packaging material, due to the organically modified montmorillonite containing a quaternary ammonium-modified montmorillonite, the layered clay minerals may be particularly well dispersed in the filler-containing layer, and therefore moisture barrier properties may be further improved.

In the packaging material for a power storage device, the modified polyolefin resin is preferred to comprise an acid-modified polyolefin resin.

According to the packaging material, since the filler containing layered clay minerals is well dispersed in the resin comprising the modified polyolefin resin, moisture barrier properties may be further improved.

In the packaging material for a power storage device, the polyfunctional isocyanate compound is preferred to comprise an isocyanurate-type polyfunctional isocyanate compound.

According to the packaging material, due to the polyfunctional isocyanate compound comprising an isocyanurate-type polyfunctional isocyanate compound, the adhesive layer can have excellent adhesion and heat resistance, and thus the packaging material can be highly improved in sealing strength and heat resistance and can have excellent barrier properties.

In the packaging material for a power storage device, the content of the filler in the resin composition is preferred to be 0.1 to 40 mass%.

According to the packaging material, moisture barrier properties can be further improved compared to the case where the content of the filler in the resin composition is less than 0.1 mass%. Furthermore, compared to the case where the content of the filler in the resin composition exceeds 40 mass%, deterioration in sealing strength and adhesion can be further suppressed.

In the packaging material for a power storage device, one side or each of both sides of the barrier layer may be further provided with an anticorrosion treatment layer.

According to the packaging material, due to the presence of the anticorrosion treatment layer, reliability of the packaging material can be maintained over a longer period of time.

In the packaging material for a power storage device, the power storage device may be a solid-state battery.

In the packaging material for a power storage device, the solid-state battery may contain a sulfide solid electrolyte.

In this case, moisture barrier properties can be improved in the packaging material. Therefore, if the packaging material is used for a solid-state battery as a power storage device, penetration of moisture into the packaging material can be suppressed. This can suppress generation of hydrogen sulfide in the packaging material due to the sulfur in the sulfide solid electrolyte reacting with moisture.

The present disclosure provides a power storage device including a battery element; and a packaging bag accommodating the battery element, wherein the packaging bag includes the packaging material for a power storage device described above.

According to the power storage device of the present disclosure, moisture barrier properties can be improved in the packaging material, thereby suppressing penetration of moisture into the packaging bag, and thus suppressing deterioration in performance of the battery element accommodated inside the packaging bag.

The power storage device may be a solid-state battery.

If the power storage device is a solid-state battery, the battery element may contain a sulfide solid electrolyte.

In this case, due to the packaging material being able to improve moisture barrier properties, penetration of moisture into the packaging bag can be suppressed. This can suppress generation of hydrogen sulfide due to the sulfur in the sulfide solid electrolyte reacting with moisture.

### [Advantageous Effects of the Invention]

According to the present disclosure, a packaging material for a power storage device capable of improving moisture barrier properties, and a power storage device can be provided.

### [Brief Description of the Drawings]

Fig. 1 is a schematic cross-sectional view illustrating a packaging material for a power storage device according to an embodiment of the present disclosure.
Fig. 2 is a schematic cross-sectional view illustrating a packaging material for a power storage device according to an embodiment of the present disclosure.
Fig. 3 is a perspective view illustrating a power storage device according to an embodiment of the present disclosure.
Fig. 4 is a cross-sectional view illustrating the battery element shown in Fig. 3.
Fig. 5 is a schematic diagram illustrating a method of preparing a sealing strength measurement sample in examples and comparative examples.

### [Description of the Embodiments]

With reference to the drawings, preferred embodiments of the present disclosure will be described in detail. In the drawings, like components are given like reference signs to omit repeated description. The dimensional ratios in the drawings should not be limited to the ratios shown in the drawings.

### [Packaging material for power storage device]

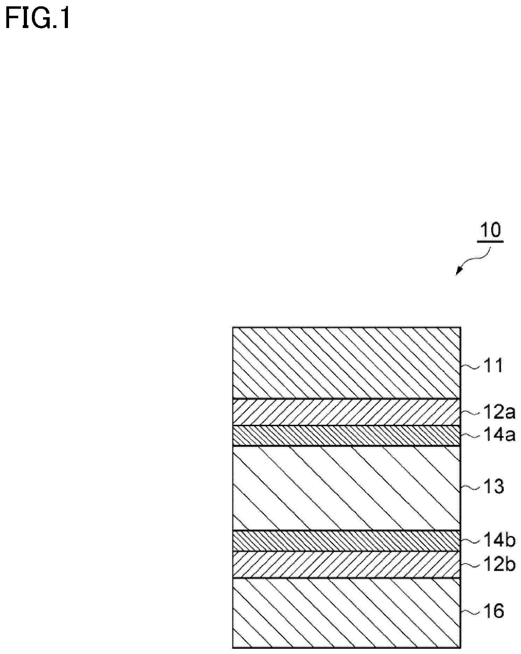

Referring to Fig. 1, a packaging material for a power storage device according an embodiment of the present disclosure will be described. Fig. 1 is a schematic cross-sectional view illustrating a packaging material for a power storage device according to an embodiment of the present disclosure.

As shown in Fig. 1, a packaging material for a power storage device (hereinafter also simply referred to as packaging material) 10 according to the present embodiment is a packaging material used for a power storage device, and includes a substrate layer 11, a first adhesive layer 12a, a barrier layer 13, a second adhesive layer 12b as an adhesion layer, and a sealant layer 16 in this order.

The second adhesive layer 12b and the sealant layer 16 each includes a filler-containing layer that contains a filler comprising layered clay minerals.

The packaging material 10 includes a first anticorrosion treatment layer 14a between the substrate layer 11 and the barrier layer 13, and a second anticorrosion treatment layer 14b between the barrier layer 13 and the second adhesive layer 12b.

In the packaging material 10, the substrate layer 11 is the outermost layer and the sealant layer 16 is the innermost layer. That is, the packaging material 10 is used so that the substrate layer 11 is located on the outside of the power storage device and the sealant layer 16 is located on the inside of the power storage device.

According to the packaging material 10, moisture barrier properties can be improved.

Details of the layers forming the packaging material 10 will be described below.

### <Substrate layer 11>

The substrate layer 11 imparts heat resistance to the packaging material, which is required in a sealing step when producing a power storage device, and prevents formation of pinholes that may occur during forming processing or during distribution. In particular, in the case of packaging materials used for large size power storage devices, for example, the substrate layer 11 can also impart scratch resistance, chemical resistance, insulation properties, and the like to the packaging material.

The substrate layer 11 is preferred to be a layer made of a resin having insulation properties. The resin that can be used include polyester resins, polyamide resins, polyimide resins, polyamide-imide resins, polyether ketone resins, polyphenylene sulfide resins, polyetherimide resins, polysulphone resins, fluororesins, phenol resins, melamine resins, urethane resins, allyl resins, silicone resins, epoxy resins, furan resins, acetyl cellulose resins, and the like.

Of these resins, polyester resins and polyamide resins are preferred to be used for the substrate layer 11 because of having good formability. Examples of the polyester resins include polyethylene terephthalate, polybutylene terephthalate, and polyethylene naphthalate. Examples of the polyamide resins include nylon 6, nylon 6,6, copolymer of nylon 6 and nylon 6,6, nylon 6, nylon 9T, nylon 10, polymetaxylylene adipamide (MXD6), nylon 11, and nylon 12.

As necessary, the substrate layer 11 may contain, for example, various additives such as flame retardants, slip agents, antiblocking agents, antioxidants, light stabilizers, dehydrating agents, crystal nucleating agents, and tackifiers.

The substrate layer 11 may be in the form of a stretched or unstretched film or in the form of a coating film. Also, the substrate layer 11 may be a single layer or a multilayer. In the case of a multilayer, layers formed of different resins may be combined. If the substrate layer 11 is a film, a laminate formed by co-extruding a plurality of layers, or a laminate formed by laminating a plurality of layers via an adhesive may be used as the substrate layer 11. If the substrate layer 11 is a coating film, a laminate formed by coating of a coating liquid the number of times the coating is applied may be used as the substrate layer 11. A laminate that is a multilayer obtained by combining a film and a coating film may also be used.

If these resins are each used in the form of a film, the substrate layer 11 is preferred to be a biaxially stretched film. If the substrate layer 11 is a biaxially stretched film, the stretching method may be, for example, sequential biaxial stretching, tubular biaxial stretching, simultaneous biaxial stretching, or the like. From the perspective of obtaining better deep drawing formability, the biaxially stretched film is preferred to be stretched using tubular biaxial stretching.

The thickness of the substrate layer 11 is preferred to be 6 µm to 40 µm, and is more preferred to be 10 µm to 30 µm. A substrate layer 11 with a thickness of 6 µm or more tends to improve pinhole resistance and insulation properties of the packaging material 10. A substrate layer 11 with a thickness of 40 µm or less can reduce the total thickness of the packaging material 10.

In order to suppress deformation of the substrate layer 11 during sealing, the substrate layer 11 is preferred to have a melting point higher than that of the sealant layer 16. The melting point of the substrate layer 11 is more preferred to be higher than that of the sealant layer 16 by 30°C or more.

### <First adhesive layer 12a>

The first adhesive layer 12a is a layer that adheres the substrate layer 11 to the barrier layer 13. The first adhesive layer 12a is obtained using a first adhesive layer-forming resin composition. For example, the first adhesive layer-forming resin composition may contain a main resin such as a polyester polyol, polyether polyol, acrylic polyol, carbonate polyol, or the like, and an isocyanate compound with two or more functionalities (polyfunctional isocyanate compound). The various polyols mentioned above can be used singly or in combination of two or more, according to the functions and performance required of the packaging material 10. As the first adhesive layer-forming resin composition forming the first adhesive layer 12a, a first adhesive layer-forming resin composition containing a main resin such as an epoxy resin and a curing agent may be used other than the first adhesive layer-forming resin compositions mentioned above, although not especially limited thereto.

According to the performance required of the first adhesive layer 12a, the first adhesive layer-forming resin composition may contain various additives such as flame retardants, slip agents, antiblocking agents, antioxidants, light stabilizers, dehydrating agents, crystal nucleating agents, and tackifiers.

The thickness of the first adhesive layer 12a is not specifically limited but, from the perspective of obtaining desired adhesive strength, conformability, processability and the like, the thickness is preferred to be, for example, 1 µm to 10 µm, and is more preferred to be 2 µm to 7 µm.

### <Barrier layer 13>

The barrier layer 13 has water vapor barrier properties to prevent penetration of moisture into the power storage device. Furthermore, the barrier layer 13 may have ductility for undergoing deep drawing. Examples of the material that can be used for the barrier layer 13 include various metal foils such as of aluminum, stainless steel, and copper, deposited metal films, deposited inorganic oxide films, deposited carbon-containing inorganic oxide films, and films provided with these deposited films. As the films provided with a deposited film, for example, deposited aluminum films or deposited inorganic oxide films can be used. These films can be used singly or in combination of two or more. The barrier layer 13 is preferred to be formed of a metal foil, and is more preferred to be formed of an aluminum foil, from the perspective of mass (specific gravity), moisture resistance, processability, and cost.

As the aluminum foil, a soft aluminum foil, particularly one that has undergone annealing, can be preferably used, from the perspective of imparting desired ductility when formed; however, for the purpose of further imparting pinhole resistance and ductility when formed, it is more preferable to use an aluminum foil containing iron. The iron content in the aluminum foil is preferred to be 0.1 to 9.0 mass%, and is more preferred to be 0.5 to 2.0 mass%, relative to 100 mass% of aluminum foil. If the iron content is 0.1 mass% or more, a packaging material 10 having much higher pinhole resistance and ductility can be obtained. If the iron content is 9.0 mass% or less, a packaging material 10 having much higher ductility can be obtained. An untreated aluminum foil may be used as the aluminum foil; however, an aluminum foil that has undergone degreasing is preferred to be used from the perspective of imparting corrosion resistance. If the aluminum foil is degreased, only one side of the aluminum foil may be degreased, or both sides may be degreased.

The thickness of the barrier layer 13 is not specifically limited, but is preferred to be 9 µm to 200 µm, and is more preferred to be 15 µm to 100 µm, considering barrier properties, pinhole resistance, and processability.

### <First and second anticorrosion treatment layers 14a and 14b>

The first and second anticorrosion treatment layers 14a and 14b are layers provided to the metal foil (metal foil layer) or the like constituting the barrier layer 13 to prevent corrosion. The first anticorrosion treatment layer 14a prevents corrosion of the barrier layer 13 due to corrosive gases in the atmosphere, and enhances adhesion between the barrier layer 13 and the first adhesive layer 12a. The second anticorrosion treatment layer 14b prevents corrosion of the barrier layer 13 due to electrolytes and gases generated inside the battery (e.g. hydrogen sulfide gas) to improve resistance to the electrolytes and gases generated inside the battery, and enhances adhesion between the barrier layer 13 and the second adhesive layer 12b. Due to the presence of the first and second anticorrosion treatment layers 14a and 14b, reliability of the packaging material 10 can be maintained over a longer period of time. The first and second anticorrosion treatment layers 14a and 14b may be identically structured or differently structured. The first and second anticorrosion treatment layers 14a and 14b (also simply referred to as anticorrosion treatment layers 14a and 14b hereinafter) may be formed, for example, by performing degreasing, hydrothermal modification, anodic oxidation, chemical conversion, or a combination of these treatments, with respect to the metal foil constituting the barrier layer 13.

Degreasing may be acid degreasing, or alkaline degreasing. The acid degreasing may be a method using an inorganic acid such as sulfuric acid, nitric acid, hydrochloric acid, or hydrofluoric acid singly, a method using a mixture of these acids, or other methods. The acid degreasing is preferred to be a treatment using an acid degreaser in which a fluorine-containing compound such as monosodium ammonium difluoride is dissolved in an inorganic acid mentioned above. According to this treatment, if an aluminum foil is used as the barrier layer 13, in particular, a degreasing effect for aluminum can be achieved and, in addition, aluminum fluoride that is passive can be formed. For this reason, this treatment is effective in terms of corrosion resistance. The alkaline degreasing may be a method using sodium hydroxide or the like.

The hydrothermal modification may be, for example, a boehmite treatment in which an aluminum foil is immersed in boiling water to which triethanolamine has been added. The anodic oxidation may be, for example, an alumite treatment.

The chemical conversion may be of an immersion type or a coating type. The immersion type chemical conversion may be, for example, chromate treatment, ceria sol treatment, zirconium treatment, titanium treatment, vanadium treatment, molybdenum treatment, calcium phosphate treatment, strontium hydroxide treatment, cerium treatment, ruthenium treatment, or various chemical conversion treatments including mixed phases of these treatments. The coating type chemical conversion may be a method of applying a coating agent having anticorrosion performance onto the barrier layer 13.

If at least part of the anticorrosion treatment layer is formed using any of hydrothermal modification, anodic oxidation, and chemical conversion among these anticorrosion treatments, degreasing mentioned above is preferred to be performed in advance. If a degreased metal foil, such as an annealed metal foil, is used as the barrier layer 13, degreasing is not required to be newly performed when forming the anticorrosion treatment layers 14a and 14b.

The coating agent used for the coating type chemical conversion is preferred to contain trivalent chromium. The coating agent may contain at least one polymer selected from the group consisting of cationic polymers and anionic polymers, which will be described later.

Of the treatments mentioned above, hydrothermal modification and anodic oxidation, in particular, can dissolve the surface of the aluminum foil with the treatment agent and form an aluminum compound (boehmite or alumite) having high corrosion resistance. Therefore, these treatments, which form a co-continuous structure from the barrier layer 13 of an aluminum foil to the anticorrosion treatment layers 14a and 14b, are encompassed by the definition of chemical conversion. On the other hand, the anticorrosion treatment layers 14a and 14b can also be formed using only a pure coating method, which is not included in the definition of chemical conversion, as will be described later. For example, this method may be a method using a rare-earth oxide sol, such as cerium oxide, with a mean particle size of 100 nm or less, exhibiting an anticorrosion effect (inhibitor effect) for aluminum, that is a material preferred from environmental aspects. Use of this method can impart an anticorrosion effect to the metal foil such as an aluminum foil even when using an ordinary coating method.

Examples of the rare-earth oxide sol include sols using various solvents such as aqueous solvents, alcohol solvents, hydrocarbon solvents, ketone solvents, ester solvents, and ether solvents. Of these sols, aqueous solvent sols (sols using aqueous solvents) are preferred.

To stabilize dispersion, normally, the rare-earth oxide sol may contain, as a dispersion stabilizer, an inorganic acid such as nitric acid, hydrochloric acid, phosphoric acid, or a salt thereof, or an organic acid such as acetic acid, malic acid, ascorbic acid, or lactic acid. Of these dispersion stabilizers, phosphoric acid, in particular, is expected to have the following effects (1) to (4) in the packaging material 10.
(1) Dispersion stabilization of sol
(2) Improvement in adhesion to the barrier layer 13 using aluminum chelating ability of the phosphoric acid
(3) Impartment of corrosion resistance by capturing aluminum ions (passivation)
(4) Improvement in cohesive force of the anticorrosion treatment layers (oxide layers) 14a and 14b by the phosphoric acid tending to be dehydrated and condensed even at low temperatures

Since the anticorrosion treatment layers 14a and 14b made of the rare-earth oxide sol are aggregates of inorganic particles, cohesive force of the layers may be reduced even after being dry-cured. Therefore, the anticorrosion treatment layers 14a and 14b in this case are preferred to be compounded with an anionic polymer or a cationic polymer mentioned below to supplement the cohesive force.

The anticorrosion treatment layers 14a and 14b are not limited to the layers mentioned above. For example, the anticorrosion treatment layers 14a and 14b may be formed using a treatment agent which is obtained by adding a phosphoric acid and a chromium compound to a resin binder (such as aminophenol), as in the coating-type chromate based on the known art. If this treatment agent is used, the layers will have an anticorrosion function balanced with adhesion. Although it is necessary to consider stability of the coating liquid, a coating agent may be prepared in advance by integrating a rare-earth oxide sol with a polycationic polymer or a polyanionic polymer, to provide the anticorrosion treatment layers 14a and 14b as layers having an anticorrosion function balanced with adhesion.

Regardless of whether the structure is a multilayer structure or a single layer structure, mass per unit area of the anticorrosion treatment layers 14a and 14b is preferred to be 0.005 to 0.200 g/m², and is more preferred to be 0.010 to 0.100 g/m². If the mass per unit area is 0.005 g/m² or more, an anticorrosion function can be easily imparted to the barrier layer 13. Even if the mass per unit area exceeds 0.200 g/m², the anticorrosion function substantially remains unchanged. If a rare-earth oxide sol is used and if the coating is excessively thick, heat-curing during drying may become insufficient, and the cohesive force may be reduced. It should be noted that the thickness of each of the anticorrosion treatment layers 14a and 14b can be converted from its specific gravity.

From the perspective of easily maintaining adhesion between the sealant layer 16 and the barrier layer 13, the anticorrosion treatment layers 14a and 14b may contain, for example, cerium oxide, 1 part by mass to 100 parts by mass of phosphoric acid or phosphate relative to 100 parts by mass of the cerium oxide, and a cationic polymer, or they may be formed by allowing the barrier layer 13 to undergo chemical conversion, or they may be formed by chemical conversion of the barrier layer 13, with a cationic polymer contained.

### <Second adhesive layer 12b>

The second adhesive layer 12b is a layer that adheres the barrier layer 13 to the sealant layer 16. The second adhesive layer 12b includes a filler-containing layer obtained using a second adhesive layer-forming resin composition which contains a resin and a filler comprising layered clay minerals. If the second adhesive layer 12b is constituted of a plurality of layers, all of the layers may be filler-containing layers, or only part of the plurality of layers may be filler-containing layers.

### (Layered clay mineral filler)

The layered clay mineral filler, which has a layered structure, allows the layers to spread apart in the second adhesive layer 12b, eventually allowing the layers to be separated from each other. After separation, the layered clay mineral filler becomes flat flakes each having a thickness of several nanometers, and the presence of these flat flakes creates a labyrinth effect that allows the moisture path to meander, thereby further improving moisture barrier properties.

The layered clay mineral filler may be a filler constituted of only layered clay minerals, or may be a filler including layered clay minerals in part.

Such a layered clay mineral filler may include smectite group clay minerals and bentonite. Bentonite is the name of a rock comprising montmorillonites as a main component and has substantially the same properties as montmorillonites.

Smectite group clay minerals may include montmorillonites, saponites, and hectorites. Of these minerals, montmorillonites are preferred as the smectite group clay minerals, from the perspective of cost and handleability.

The montmorillonites may be unmodified or modified. The modified montmorillonites are preferred to comprise organically modified montmorillonites. If the modified montmorillonites comprise organically modified montmorillonites, the layered clay minerals may be well dispersed in the second adhesive layer 12b, and therefore moisture barrier properties of the packaging material 10 may be improved.

The organically modified montmorillonites may be a quaternary ammonium modified montmorillonite, phosphonium modified montmorillonite, imidazolium modified montmorillonite, or the like. Of these, the quaternary ammonium modified montmorillonite is preferred. In this case, moisture barrier properties may be further improved due to the layered clay minerals being dispersed particularly well in the second adhesive layer 12b.

### (Second adhesive layer-forming resin composition)

The resin in the second adhesive layer-forming resin composition is preferred to contain a modified polyolefin resin. Modified polyolefin resins are more likely to penetrate between layers in such a layered clay mineral filler, and therefore the layered clay mineral filler can be dispersed in the resins more satisfactorily. If the second adhesive layer-forming resin composition contains a modified polyolefin resin, the second adhesive layer 12b can have higher adhesion for the barrier layer 13 and the sealant layer 16 and thus can improve lamination strength of the packaging material 10.

The modified polyolefin resin may be a hydroxyl group-modified polyolefin resin, glycidyl-modified polyolefin resin, acid-modified polyolefin resin, or the like. Of these resins, the acid-modified polyolefin resin is preferred, from the perspective of adhesion to the barrier layer 13.

The acid-modified polyolefin resin may be a polyolefin resin graft-modified by an unsaturated carboxylic acid derivative derived from an unsaturated carboxylic acid, an unsaturated sulfonic acid, or an acid anhydride or unsaturated ester of an unsaturated carboxylic acid.

Examples of the unsaturated carboxylic acid include acrylic acids, methacrylic acids, maleic acids, fumaric acids, itaconic acids, citraconic acids, tetrahydrophthalic acids, and bicyclo[2,2,1]hept-2-ene-5,6-dicarboxylic acid.

Examples of the acid anhydride of an unsaturated carboxylic acid include maleic anhydrides, itaconic anhydrides, citraconic anhydrides, tetrahydrophthalic anhydrides, and bicyclo[2,2,1]hept-2-ene-5,6-dicarboxylic acid anhydride.

Examples of the ester of an unsaturated carboxylic acid include methyl acrylates, methyl methacrylates, ethyl methacrylates, butyl methacrylates, dimethyl maleates, monomethyl maleates, diethyl fumarates, dimethyl itaconates, diethyl citraconates, dimethyl tetrahydrophthalic anhydrides, and bicyclo[2,2,1]hept-2-ene-5,6-dimethyl dicarboxylate.

Examples of the polyolefin resin include low density polyethylenes, medium density polyethylenes, high density polyethylenes, ethylene-α-olefin copolymers, homopolypropylenes, block polypropylenes, random polypropylenes, and propylene-α-olefin copolymers.

The acid-modified polyolefin resin is preferred to be a polyolefin resin modified by a maleic anhydride, from the perspective of achieving good adhesion between the barrier layer 13 and the second adhesive layer 12b.

Examples of the modified polypropylene resin include an Admer manufactured by Mitsui Chemicals Corporation, an Modic manufactured by Mitsubishi Chemical Corporation, a TOYO-TAC manufactured by Toyobo Co., Ltd., and a SANSTACK manufactured by Sanyo Chemical Industries, Ltd. Such modified polyolefin resins have good reactivity with various types of metal and polymers having various functional groups, and thus can impart adhesion to the second adhesive layer 12b using the reactivity.

The polyolefin resin, if the sealant layer-forming resin composition forming the sealant layer 16 contains a polyolefin resin as a resin, is preferred to be a polyolefin resin similar to this polyolefin resin. For example, if the sealant layer-forming resin composition contains a polypropylene as a resin, the polyolefin of the acid-modified polyolefin resin in the second adhesive layer-forming resin composition is preferred to be a polypropylene. **In** this case, the second adhesive layer 12b can be highly improved in adhesion to the sealant layer 16, and can improve heat resistance of the packaging material 10.

The second adhesive layer-forming resin composition, if it contains a modified polyolefin resin, is preferred to further contain a polyfunctional isocyanate compound as a curing agent. In this case, due to the second adhesive layer 12b further containing a polyfunctional isocyanate compound, the packaging material 10 is further improved in moisture barrier properties.

Examples of the polyfunctional isocyanate compound include diisocyanates such as tolylene diisocyanate, xylylene diisocyanate or hydrogenated products thereof, hexamethylene diisocyanate, 4,4'-diphenylmethane diisocyanate or hydrogenated products thereof, and isophorone diisocyanate; polyisocyanates such as adducts obtained by reacting these isocyanates with polyhydric alcohols such as trimethylolpropane, biurets obtained by reacting the isocyanates with water, or isocyanurates as trimers (isocyanurate-type polyfunctional isocyanate compounds); and blocked polyisocyanates obtained by blocking these polyisocyanates with alcohols, lactams, oximes, and the like.

Among them, the polyfunctional isocyanate compound is preferred to contain an isocyanurate (isocyanurate-type polyfunctional isocyanate compound). In this case, due to the polyfunctional isocyanate compound containing an isocyanurate, the second adhesive layer 12b can have good adhesion and heat resistance, and thus the packaging material 10 can be highly improved in sealing strength and heat resistance.

The second adhesive layer-forming resin composition is preferred to further contain a carbodiimide compound as a curing agent.

In this case, due to the second adhesive layer-forming resin composition further containing a carbodiimide compound, the packaging material 10 can be further improved in sealing strength and thus can be further improved in moisture barrier properties, compared to the case where the second adhesive layer-forming resin composition does not contain a carbodiimide compound.

Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl) carbodiimide, N,N'-dioctyldecylcarbodiimide, N-tolyl-N'-cyclohexylcarbodiimide, N,N'-di-2,2-di-t-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, and N,N'-di-p-tolylcarbodiimide. These compounds can be used singly or in combination of two or more.

If the second anticorrosion treatment layer 14b is provided on the barrier layer 13 and includes a layer containing at least one polymer selected from the group consisting of the cationic polymers and anionic polymers mentioned above, the second adhesive layer-forming resin composition is preferred to contain a compound having reactivity (also referred to as reactive compound hereinafter) with the polymer contained in the second anticorrosion treatment layer 14b.

For example, if the second anticorrosion treatment layer 14b contains a cationic polymer, the second adhesive layer-forming resin composition may contain a compound that is reactive with the cationic polymer. If the second anticorrosion treatment layer 14b contains an anionic polymer, the second adhesive layer-forming resin composition may contain a compound that is reactive with the anionic polymer. Also, if the second anticorrosion treatment layer 14b contains both of a cationic polymer and an anionic polymer, the second adhesive layer-forming resin composition may contain a compound that is reactive with the cationic polymer and a compound that is reactive with the anionic polymer. However, the second adhesive layer-forming resin composition does not necessarily need to contain the two kinds of compounds, but may contain a compound that is reactive with both the cationic polymer and the anionic polymer. The expression "reactive with" refers to forming a covalent bond with a cationic polymer or an anionic polymer.

The compound that is reactive with a cationic polymer may be a glycidyl compound, a compound having a carboxy group, or a compound having an oxazoline group. These compounds can be used singly or in combination of two or more. The polyfunctional isocyanate compounds mentioned above are also examples of the compounds that are reactive with a cationic polymer.

Examples of the glycidyl compound include: epoxy compounds each obtained by reacting epichlorohydrin with a glycol, such as ethylene glycol, diethylene glycol, triethylene glycol, polyethylene glycol, propylene glycol, dipropylene glycol, tripropylene glycol, polypropylene glycol, 1,4-butanediol, 1,6-hexanediol, and neopentyl glycol; epoxy compounds each obtained by reacting epichlorohydrin with a polyhydric alcohol, such as glycerin, polyglycerin, trimethylolpropane, pentaerythritol, and sorbitol; and epoxy compounds each obtained by reacting epichlorohydrin with a dicarboxylic acid, such as a phthalic acid, terephthalic acid, oxalic acid, and adipic acid.

Examples of the compound having a carboxy group include aliphatic carboxylic acid compounds, aromatic dicarboxylic acid compounds, and salts thereof. Also, poly(meth)acrylic acids, and alkali (earth) metal salts of poly(meth)acrylic acids may be used.

Examples of the compound having an oxazoline group include low molecular weight compounds having two or more oxazoline units, or when using a polymerizable monomer such as isopropenyloxazoline, compounds obtained by copolymerizing the polymerizable monomer with acrylic monomers such as (meth)acrylic acids, alkyl ester (meth)acrylates, and hydroxyalkyl (meth)acrylates.

The compound reactive with an anionic polymer may be at least one compound selected from the group consisting of glycidyl compounds and compounds having an oxazoline group. As the glycidyl compound or the compound having an oxazoline group, those which are exemplified above as crosslinking agents for converting a cationic polymer into a crosslinked structure may be used. Of these compounds, a glycidyl compound is preferred from the perspective of being highly reactive with an anionic polymer.

If the second adhesive layer-forming resin composition contains a modified polyolefin resin, it is preferred that the reactive compound is also reactive with the modified polyolefin resin (i.e., forms a covalent bond with the modified polyolefin resin). Thus, adhesion to the second anticorrosion treatment layer 14b is further enhanced. In addition, the modified polyolefin resin is converted into a crosslinked structure to further improve solvent resistance of the packaging material 10.

If the modified polyolefin resin is an acid-modified polyolefin resin, for example, the content of the reactive compound is preferred to be 1 equivalent to 10x equivalent relative to the acid group in the acid-modified polyolefin resin. If the content of the reactive compound is 1 equivalent or more, the reactive compound sufficiently reacts with the acidic group in the acid-modified polyolefin resin. On the other hand, if the content of the reactive compound is 10x equivalent or less, unreacted substances are less likely to remain in the cross-linking reaction between the acid-modified polyolefin resin and the reactive compound, and therefore the various types of performance are less likely to deteriorate. Accordingly, for example, the content of the reactive compound is preferred to be 5 to 20 parts by mass (solid content ratio) relative to 100 parts by mass of the acid-modified polyolefin resin.

The second adhesive layer-forming resin composition is preferred to contain, for example, an acid-modified polyolefin resin, a polyfunctional isocyanate compound, and a carbodiimide compound, from the perspective of suppressing decrease in lamination strength when corrosive gases such as hydrogen sulfide or electrolytes are involved, and from the perspective of further suppressing deterioration in insulation properties.

As the second adhesive layer-forming resin composition for forming the second adhesive layer 12b, for example, a polyurethane-based adhesive can also be used, which is obtained by mixing a polyester polyol composed of a hydrogenated dimer fatty acid and diol, a polyisocyanate, and a layered clay mineral filler. The second adhesive layer-forming resin composition may be a polyurethane resin obtained by reacting a bifunctional or higher isocyanate compound with a base resin such as a polyester polyol, polyether polyol, acrylic polyol, or carbonate polyol, an epoxy resin obtained by reacting an amine compound or the like with a base resin having an epoxy group, or other resins. These resins are preferred from the perspective of heat resistance.

The content of the layered clay mineral filler in the second adhesive layer-forming resin composition is not specifically limited, but is preferred to be 0.1 to 40 mass%, more preferred to be 1 to 20 mass%, and is especially preferred to be 2 to 15 mass%.

If the content of the layered clay mineral filler in the resin composition is 0.1 to 40 mass%, a labyrinth effect may be easily created by the layered clay mineral filler and moisture barrier properties can be further improved, compared to the case where the content of the layered clay mineral filler in the resin composition is less than 0.1 mass%. Furthermore, compared to the case where the content of the layered clay mineral filler in the resin composition exceeds 40 mass%, the second adhesive layer 12b is less likely to become brittle, further suppressing decrease in sealing strength of the packaging material 10, or deterioration in adhesion to the barrier layer 13 and the sealant layer 16.

As necessary, the second adhesive layer-forming resin composition may contain various additives such as flame retardants, slip agents, antiblocking agents, antioxidants, light stabilizers, tackifiers, dehydrating agents, and crystal nucleating agents.

The thickness of the second antiglare layer 12b is not specifically limited but is preferred to be 0.05 µm to 30 µm. In this case, sufficient adhesion is achieved compared to the case where the thickness of the second adhesive layer 12b is less than 0.05 µm. Furthermore, compared to the case where the thickness of the second adhesive layer 12b exceeds 30 µm, the volumetric energy density of the power storage device can be further enhanced. The thickness of the second adhesive layer 12b is more preferred to be 0.1 µm to 10 µm.

### <Sealant layer 16>

The sealant layer 16, which is a layer imparting sealing properties to the packaging material 10 in heat sealing, is disposed on the inside and heat-sealed (thermally adhered) when the power storage device is assembled.

The sealant layer 16 includes a filler-containing layer which is obtained using a sealant layer-forming resin composition containing a resin and a layered clay mineral filler. The sealant layer 16 may be a single-layer film or a multilayer film. If the sealant layer 16 is a multilayer film, all of the layers may be filler-containing layers, or only part of them may be filler-containing layers. For example, if the sealant layer 16 is a two-layer film, both of the two layers may be filler-containing layers, or only the second adhesive layer 12b-side layer of the two layers may be a filler-containing layer, or only the layer on the side facing away from the second adhesive layer 12b may be a filler-containing layer.

### (Layered clay mineral filler)

The layered clay mineral filler, which has a layered structure, allows the layers to spread apart in the sealant layer 16, eventually allowing the layers to be separated from each other. After separation, the layered clay mineral filler becomes flat flakes each having a thickness of several nanometers, and the presence of these flat flakes creates a labyrinth effect that allows the moisture path to meander, thereby further improving moisture barrier properties.

The layered clay mineral filler may be a filler constituted of only layered clay minerals, or may be a filler including layered clay minerals in part.

Such a layered clay mineral filler may include smectite group clay minerals and bentonite. Bentonite is the name of a rock comprising montmorillonites as a main component and has substantially the same properties as montmorillonites.

Smectite group clay minerals may include montmorillonites, saponites, and hectorites. Of these minerals, montmorillonites are preferred as the smectite group clay minerals, from the perspective of cost and handleability.

The montmorillonites may be unmodified or modified. The modified montmorillonites are preferred to comprise organically modified montmorillonites. If the modified montmorillonite comprises an organically modified montmorillonite, the layered clay minerals may be well dispersed in the sealant layer 16, and therefore moisture barrier properties of the packaging material 10 may be further improved.

The organically modified montmorillonites may be a quaternary ammonium modified montmorillonite, phosphonium modified montmorillonite, imidazolium modified montmorillonite, or the like. Of these minerals, the quaternary ammonium modified montmorillonite is preferred. In this case, moisture barrier properties may be further improved due to the layered clay minerals being dispersed particularly well in the sealant layer 16.

### (Sealant layer-forming resin composition)

The resin contained in the sealant layer-forming resin composition may be a resin film constituted of a polyolefin resin, or polyester resin. The resins constituting the sealant layer 16 (hereinafter also referred to as base resins) may be used singly, or in combination of two or more.

Examples of the polyolefin resin include polyethylenes such as low density polyethylenes (LDPEs or LLDPEs), medium density polyethylenes, and high density polyethylenes; ethylene-α-olefin copolymers; polypropylenes such as homopolypropylenes, block polypropylenes, and random polypropylenes; block or random copolymers containing a propylene as a copolymer component; polybutenes; and propylene-α-olefin copolymers. Of the polyolefin resins, polypropylenes are preferred, and block polypropylenes are more preferred, from the perspective of heat resistance and flexibility.

Examples of the polyester resin include polyethylene terephthalate (PET) resins, polybutylene terephthalate (PBT) resins, polyethylene naphthalate (PEN) resins, polybutylene naphthalate (PBN) resins, and copolymers thereof.

The resins mentioned above may contain a polyolefin elastomer. The polyolefin elastomer may have or may not have compatibility with the base resins mentioned above; however, a compatible polyolefin elastomer having compatibility and an incompatible polyolefin elastomer not having compatibility may both be contained. Having compatibility (compatible) refers to being dispersed in a base resin in a dispersed phase size of 1 nm or more and less than 500 nm. Not having compatibility (incompatible) refers to being dispersed in a base resin in a dispersed phase size of 500 nm or more and less than 20 µm.

If the base resin is a polypropylene resin, the compatible polyolefin elastomer may be, for example, a propylene-butene-1 random copolymer, and the incompatible polyolefin elastomer may be, for example, an ethylene-butene-1 random copolymer. Such polyolefin elastomers can be used singly or in combination of two or more.

The resins mentioned above are preferred to further contain a modified polyolefin resin. Modified polyolefin resins are more likely to penetrate between layers in the layered clay mineral filler, and therefore the layered clay mineral filler can be dispersed in the resins more satisfactorily. If the resins mentioned above contain a modified polyolefin resin, the sealant layer 16 can have higher adhesion for the second adhesive layer 12b and thus can improve lamination strength of the packaging material 10.

The modified polyolefin resin may be a hydroxyl group-modified polyolefin resin, glycidyl-modified polyolefin resin, acid-modified polyolefin resin, or the like. Of these resins, the acid-modified polyolefin resin is preferred.

The acid-modified polyolefin resin may be a polyolefin resin graft-modified by an unsaturated carboxylic acid derivative derived from an unsaturated carboxylic acid, an unsaturated sulfonic acid, or an acid anhydride or unsaturated ester of an unsaturated carboxylic acid.

Examples of the unsaturated carboxylic acid include acrylic acids, methacrylic acids, maleic acids, fumaric acids, itaconic acids, citraconic acids, tetrahydrophthalic acids, and bicyclo[2,2,1]hept-2-ene-5,6-dicarboxylic acid.

Examples of the acid anhydride of an unsaturated carboxylic acid include maleic anhydrides, itaconic anhydrides, citraconic anhydrides, tetrahydrophthalic anhydrides, and bicyclo[2,2,1]hept-2-ene-5,6-dicarboxylic acid anhydride.

Examples of the ester of an unsaturated carboxylic acid include methyl acrylates, methyl methacrylates, ethyl methacrylates, butyl methacrylates, dimethyl maleates, monomethyl maleates, diethyl fumarates, dimethyl itaconates, diethyl citraconates, dimethyl tetrahydrophthalic anhydrides, and bicyclo[2,2,1]hept-2-ene-5,6-dimethyl dicarboxylate.

Examples of the polyolefin resin include low density polyethylenes, medium density polyethylenes, high density polyethylenes, ethylene-α-olefin copolymers, homopolypropylenes, block polypropylenes, random polypropylenes, and propylene-α-olefin copolymers.

The acid-modified polyolefin resin is preferred to be a polyolefin resin modified by a maleic anhydride, from the perspective of achieving good adhesion between the second adhesive layer 12b and the sealant layer 16.

Examples of the modified polypropylene resin include an Admer manufactured by Mitsui Chemicals Corporation, an Modic manufactured by Mitsubishi Chemical Corporation, a TOYO-TAC manufactured by Toyobo Co., Ltd., and a SANSTACK manufactured by Sanyo Chemical Industries, Ltd. Such modified polyolefin resins have good reactivity with various types of metal and polymers having various functional groups, and thus, can impart adhesion to the sealant layer 16 using the reactivity.

If an acid-modified polyolefin resin is used in the second adhesive layer-forming resin composition that forms the second adhesive layer 12b, the polyolefin of the acid-modified polyolefin resin is preferred to be a polyolefin similar to that used in the acid-modified polyolefin resin. For example, if the resin composition forming the second adhesive layer 12b comprises an acid-modified polypropylene, the acid-modified polyolefin resin in the sealant layer-forming resin composition for forming the sealant layer 16 is preferred to be an acid-modified polypropylene. In this case, the sealant layer 16 can be highly improved in adhesion to the second adhesive layer 12b, and can improve heat resistance of the packaging material 10.

The content of the layered clay mineral filler in the resin composition of the sealant layer 16 is not specifically limited, but is preferred to be 0.1 to 40 mass%, more preferred to be 1 to 20 mass%, and is especially preferred to be 2 to 15 mass%.

If the content of the layered clay mineral filler in the resin composition is 0.1 to 40 mass%, a labyrinth effect is likely to be created and moisture barrier properties can be further improved, compared to the case where the content of the layered clay mineral filler in the resin composition is less than 0.1 mass%. Furthermore, compared to the case where the content of the layered clay mineral filler in the resin composition exceeds 40 mass%, the sealant layer 16 is less likely to become brittle, further suppressing decrease of sealing strength of the packaging material 10, or deterioration in adhesion to the second adhesive layer 12b.

The sealant layer 16 may contain, for example, a slip agent, antiblocking agent, antioxidant, light stabilizer, flame retardant, tackifier, crystal nucleating agent, etc. as additive components. The content of these additive components is preferred to be 5 parts by mass or less when the total mass of the sealant layer 16 is regarded to be 100 parts by mass.

The thickness of the sealant layer 16 is not specifically limited, but is preferred to be in the range of 20 µm to 150 µm, more preferred to be in the range of 30 µm to 150 µm, and is even more preferred to be in the range of 40 µm to 100 µm.

If the thickness of the sealant layer 16 is 20 µm or more, the packaging material 10 may be further improved in sealing strength. If the thickness of the sealant layer 16 is 150 µm or less, the volumetric energy density of the power storage device can be further enhanced.

Fig. 1 shows the case where the anticorrosion treatment layers 14a and 14b are provided to both respective sides of the barrier layer 13; however, only either of the anticorrosion treatment layers 14a and 14b may be provided to the barrier layer 13.

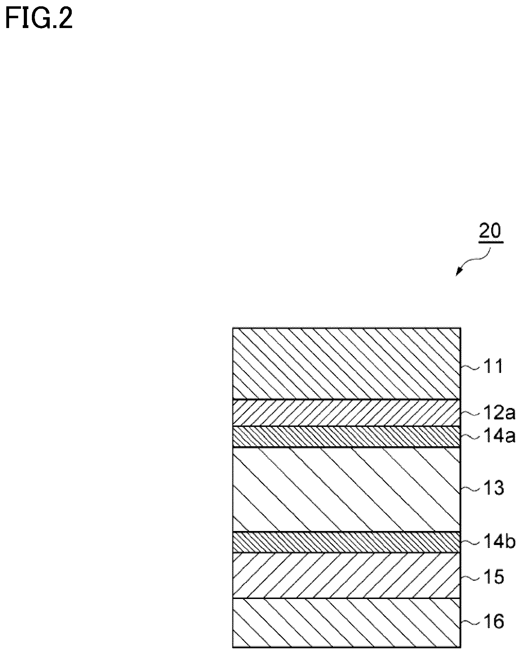

Fig. 1 shows the case where the barrier layer 13 is laminated with the sealant layer 16 using the second adhesive layer 12b as an adhesive layer; however, similarly to the packaging material 20 shown in Fig. 2, an adhesive resin layer 15 may be laminated between the barrier layer 13 and the sealant layer 16, as an adhesive layer. Also, in the packaging material 20 shown in Fig. 2, a second barrier layer 12b may be further provided between the barrier layer 13 and the adhesive resin layer 15.

### <Adhesive resin layer 15>

The adhesive resin layer 15 includes a filler-containing layer which is obtained using an adhesive resin layer-forming resin composition. The adhesive resin layer-forming resin composition comprises a resin and a layered clay mineral filler. The adhesive resin layer 15 may be a single-layer film or a multilayer film. If the adhesive resin layer 15 is a multilayer film, all of the layers may be filler-containing layers, or only part of them may be filler-containing layers.

### (Layered clay mineral filler)

The layered clay mineral filler, which has a layered structure, allows the layers to spread apart in the adhesive resin layer 15, eventually allowing the layers to be separated from each other. After separation, the layered clay mineral filler becomes flat flakes each having a thickness of several nanometers, and the presence of these flat flakes creates a labyrinth effect that allows the moisture path to meander, thereby further improving moisture barrier properties.

The layered clay mineral filler may be a filler constituted of only layered clay minerals, or may be a filler including layered clay minerals in part.

Such a layered clay mineral filler may include smectite group clay minerals and bentonite. Bentonite is the name of a rock comprising montmorillonites as a main component and has substantially the same properties as montmorillonites.

Smectite group clay minerals may include montmorillonites, saponites, and hectorites. Of these minerals, montmorillonites are preferred as the smectite group clay minerals, from the perspective of cost and handleability.

The montmorillonites may be unmodified or modified. The modified montmorillonites are preferred to comprise organically modified montmorillonites. If the modified montmorillonites comprise organically modified montmorillonites, the layered clay minerals may be well dispersed in the second adhesive layer 12b, and therefore moisture barrier properties of the packaging material 10 may be improved.

The organically modified montmorillonites may be a quaternary ammonium modified montmorillonite, phosphonium modified montmorillonite, imidazolium modified montmorillonite, or the like. Of these minerals, the quaternary ammonium modified montmorillonite is preferred. In this case, moisture barrier properties may be further improved due to the layered clay minerals being dispersed particularly well in the adhesive resin layer 15.

### (Adhesive resin layer-forming resin composition)

The resin contained in the adhesive resin layer-forming resin composition is not specifically limited, but is preferred to contain a modified polyolefin resin, from the perspective improving adhesion to the barrier layer 13. Modified polyolefin resins are more likely to penetrate between layers in the layered clay mineral filler, and therefore the layered clay mineral filler can be dispersed in the resins more satisfactorily. If the adhesive resin layer-forming resin composition contains a modified polyolefin resin, the adhesive resin layer 15 can have higher adhesion for the barrier layer 13 and the sealant layer 16 and thus can improve lamination strength of the packaging material 20.

The modified polyolefin resin may be a hydroxyl group-modified polyolefin resin, glycidyl-modified polyolefin resin, acid-modified polyolefin resin, or the like. Of these resins, the acid-modified polyolefin resin is preferred, from the perspective of adhesion to the barrier layer 13.

The acid-modified polyolefin resin may be a polyolefin resin graft-modified by an unsaturated carboxylic acid derivative derived from an unsaturated carboxylic acid, an unsaturated sulfonic acid, or an acid anhydride or unsaturated ester of an unsaturated carboxylic acid.

Examples of the unsaturated carboxylic acid include acrylic acids, methacrylic acids, maleic acids, fumaric acids, itaconic acids, citraconic acids, tetrahydrophthalic acids, and bicyclo[2,2,1]hept-2-ene-5,6-dicarboxylic acid.

Examples of the acid anhydride of an unsaturated carboxylic acid include maleic anhydrides, itaconic anhydrides, citraconic anhydrides, tetrahydrophthalic anhydrides, and bicyclo[2,2,1]hept-2-ene-5,6-dicarboxylic acid anhydride.

Examples of the ester of an unsaturated carboxylic acid include methyl acrylates, methyl methacrylates, ethyl methacrylates, butyl methacrylates, dimethyl maleates, monomethyl maleates, diethyl fumarates, dimethyl itaconates, diethyl citraconates, dimethyl tetrahydrophthalic anhydrides, and bicyclo[2,2,1]hept-2-ene-5,6-dimethyl dicarboxylate.

Examples of the polyolefin resin include low density polyethylenes, medium density polyethylenes, high density polyethylenes, ethylene-α-olefin copolymers, homopolypropylenes, block polypropylenes, random polypropylenes, and propylene-α-olefin copolymers.

The acid-modified polyolefin resin is preferred to be a polyolefin resin modified by a maleic anhydride, from the perspective of achieving good adhesion between the barrier layer 13 and the adhesive resin layer 15.

Examples of the modified polypropylene resin include an Admer manufactured by Mitsui Chemicals Corporation, an Modic manufactured by Mitsubishi Chemical Corporation, a TOYO-TAC manufactured by Toyobo Co., Ltd., and a SANSTACK manufactured by Sanyo Chemical Industries, Ltd. Such modified polyolefin resins have good reactivity with various types of metal and polymers having various functional groups, and thus, can impart adhesion to the adhesive resin layer 15 using the reactivity.

The polyolefin resin, if the sealant layer-forming resin composition forming the sealant layer 16 contains a polyolefin resin as a resin, is preferred to be a polyolefin resin similar to this polyolefin resin. For example, if the sealant layer-forming resin composition contains a polypropylene as a resin, the polyolefin of the acid-modified polyolefin resin in the adhesive resin layer-forming resin composition is preferred to be a polypropylene. In this case, the adhesive resin layer 15 can be highly improved in adhesion to the sealant layer 16, and can improve heat resistance of the packaging material 10.

As necessary, the adhesive resin layer 15 may contain, for example, various compatible and incompatible elastomers, and various additives such as flame retardants, slip agents, antiblocking agents, antioxidants, light stabilizers, dehydrating agents, crystal nucleating agents, and tackifiers.

The thickness of the adhesive resin layer 15 is not specifically limited, but is preferred to be 1 µm to 30 µm. If the thickness of the adhesive resin layer 15 is 1 µm or more, sufficient adhesion can be achieved. If the thickness of the adhesive resin layer 15 is 30 µm or less, the total thickness of the packaging material 10 may be reduced, and deterioration in volumetric energy density can be suppressed when a battery is prepared using the packaging material 10. If an adhesive resin layer 15 is bonded to the barrier layer 13 via a second anticorrosion treatment layer 14b using a dry lamination method, the thickness of the adhesive resin layer 15 is preferred to be 1 µm to 10 µm. If an adhesive resin layer 15 is bonded to the barrier layer 13 via a second anticorrosion treatment layer 14b using an extrusion method, the thickness of the adhesive resin layer 15 is preferred to be 5 µm to 30 µm. The thickness of the adhesive resin layer 15 may be smaller than or equal to that of the sealant layer 16, from the perspective of stress relaxation and moisture permeation.

In the packaging material 20, the total thickness of the adhesive resin layer 15 and the sealant layer 16 is preferred to be in the range of 5 µm to 180 µm, more preferred to be in the range of 10 µm to 120 µm, and is even more preferred to be in the range of 20 µm to 100 µm, from the perspective of balancing film thickness reduction of the packaging material 20 with improvement in sealing strength under high temperature conditions.

### [Method of producing packaging material]

Next, an example of a method of producing the packaging material 10 shown in Fig. 1 will be described. The method of producing the packaging material 10 should not be limited to the method described below.

The method of producing the packaging material 10 of the present embodiment includes a step of providing the anticorrosion treatment layers 14a and 14b to the barrier layer 13, a step of bonding the substrate layer 11 to the barrier layer 13 using the first adhesive layer 12a, a step of preparing a laminate by further laminating the sealant layer 16 via the second adhesive layer 12b, and, as necessary, a step of aging the obtained laminate.

### (Step of laminating anticorrosion treatment layers 14a and 14b on barrier layer 13)

In the present step, the anticorrosion treatment layers 14a and 14b are formed on the barrier layer 13. As described above, the method may include applying a degreasing treatment, hydrothermal modification treatment, anodic oxidation treatment, or chemical conversion treatment to the barrier layer 13, or applying a coating agent having an anticorrosion function onto the barrier layer 13.

If the anticorrosion treatment layers 14a and 14b are multilayers, they can be each formed, for example, by applying a coating liquid (coating agent) for constituting an underlayer-side (barrier layer 13-side) anticorrosion treatment layer onto the barrier layer 13, followed by baking to form a first layer, applying a coating liquid (coating agent) for forming an overlayer-side anticorrosion treatment layer onto the first layer, followed by baking to form a second layer, and repeating these processes.

The degreasing treatment may be performed using a spraying method or an immersion method. The hydrothermal modification treatment and anodic oxidation treatment can be performed using an immersion method. The chemical conversion treatment can be performed by appropriately selecting an immersion method, spraying method, coating method, or the like depending on the type of the chemical conversion treatment.

For the method of applying the coating agent having anticorrosion performance, various methods can be used, such as gravure coating, reverse coating, roll coating, and bar coating.

As described above, these treatments may be applied to both sides or one side of the metal foil constituting the barrier layer 13. If only one side is treated, the treatment surface is preferred to be at a side on which the sealant layer 16 is to be laminated. As necessary, the above treatments may also be applied to the surface of the substrate layer 11.

The amount of the coating agent for forming each of the first and second layers may be 0.005 to 0.200 g/m², or may preferably be 0.010 to 0.100 g/m².

If necessary, dry curing can be performed within a base material temperature range of 60 to 300°C depending on the drying conditions of the anticorrosion treatment layers 14a and 14b used. The base material temperature refers to the temperature of the barrier layer 13 (e.g., metal foil).

### (Step of bonding substrate layer 11 and barrier layer 13 together)

In the present step, the barrier layer 13 provided with the anticorrosion treatment layers 14a and 14b is bonded to the substrate layer 11 via the first adhesive layer 12a. The bonding method may be a method that uses a technique such as dry lamination, non-solvent lamination, or wet lamination to bond both layers together using the materials mentioned above constituting the first adhesive layer 12a. The dry coating amount of the first adhesive layer 12a may be in the range of 1 to 10 g/m², or may preferably be in the range of 2 to 7 g/m².

### (Step of laminating second adhesive layer 12b and sealant layer 16)

In the present step, the sealant layer 16 is bonded to the second anticorrosion treatment layer 14b-side of the barrier layer 13 via the second adhesive layer 12b. The bonding method may be wet lamination, dry lamination, or the like.

For example, if the sealant layer 16 is bonded using dry lamination, the second adhesive layer-forming resin composition for forming the second adhesive layer 12b may be applied onto the second anticorrosion treatment layer 14b, followed by drying at a predetermined temperature to remove the solvent, and then the sealant layer 16 may be laminated. The method of applying the second adhesive layer-forming resin composition may be any one of the coating methods mentioned above. A preferred dry coating amount of the second adhesive layer-forming resin composition is similar to the amount of the first adhesive layer-forming resin composition for forming the first adhesive layer 12a.

The second adhesive layer-forming resin composition can be obtained by dissolving or dispersing a resin, a layered clay mineral filler, or the like in a solvent. It is preferred that the second adhesive layer-forming resin composition is obtained by firstly dispersing a layered clay mineral filler in a solvent, and then mixing a resin or a curing agent into the dispersion.

The second adhesive layer-forming resin composition is preferred to further contain a dispersant.

In this case, the dispersant can enhance the dispersibility of the layered clay mineral filler, and at the same time can easily suppress deterioration in performance (e.g., adhesion strength, etc.) of the second adhesive layer 12b.

As the dispersant, a surfactant such as a metal soap (e.g., zinc stearate), for example, may be used. If the resin comprises a modified polyolefin resin, the modified polyolefin resin can function as a dispersant. If the second adhesive layer-forming resin composition containing a layered clay mineral filler is liquid at room temperature, the layered clay mineral filler is preferred to be dispersed using a dispersion device such as a bead mill, from the perspective of improving dispersibility of the layered clay mineral filler. If the second adhesive layer-forming resin composition containing a layered clay mineral filler is solid at room temperature, a dispersion device such as a kneader that dissolves and disperses the second adhesive layer-forming resin composition is preferred to be used to disperse the layered clay mineral filler.

The average particle size of the layered clay mineral filler in the second adhesive layer-forming resin composition, although not especially limited, is preferred to be 20 µm or less. If the average particle size of the layered clay mineral filler is 20 µm or less, the dispersed state of the layered clay mineral filler can be maintained satisfactorily, and deterioration in cohesive force of the second adhesive layer 12b formed as a coating film can be suppressed. The average particle size of the layered clay mineral filler is preferred to be 10 µm or less, and is especially preferred to be 5 µm or less. The average particle size of the layered clay mineral filler is preferred to be 0.01 µm or more. In this case, cohesion between particles is less likely to occur, and aggregates are less likely to be formed during dispersion, stabilizing the average particle size, compared to the case where the average particle size of the layered clay mineral filler is less than 0.01 µm.

The average particle size can be obtained by capturing an image of a plurality of filler particles with magnification using an electron microscope, determining the size of each filler particle by image analysis, and calculating an average of the particle sizes. The size of each filler particle is specifically based on an area S of each filler particle obtained from image analysis in terms of an area of a circle, and is calculated by multiplying a radius r (r=(S/π)^{1/2}) of the area S of the circle by 2.

The sealant layer 16, for example, can be prepared using the sealant layer-forming resin composition for forming the sealant layer 16 described above, and using a melt extruder using a T die. From the perspective of productivity, the melt extruder may be used at a processing rate of 80 m/min or more.

When forming the sealant layer 16, a masterbatch may be prepared in advance by mixing a resin with a layered clay mineral filler, and the sealant layer-forming resin composition, which is obtained by mixing the masterbatch when extrusion-laminated with the above base resin, may be used.

In this case, the base resin used may be a resin, for example, whose properties such as MFR are substantially the same as those of the resin contained in the masterbatch.

The resin mixed with the layered clay mineral filler when preparing a masterbatch may be a modified polyolefin resin. The modified polyolefin resin is particularly preferred to be an acid-modified polyolefin resin from the perspective of improving dispersibility for the base resin.

The concentration of the masterbatch in the sealant layer-forming resin composition may be, for example, 5 to 50 mass%. If the concentration of the masterbatch in the sealant layer-forming resin composition is 5 mass% or more, the masterbatch can be uniformly dispersed in the sealant layer 16. If the concentration of the masterbatch in the sealant layer-forming resin composition is 50 mass% or less, the masterbatch can be sufficiently dispersed by kneading during extrusion, and problems such as film breakage are less likely to occur.

Furthermore, when forming the sealant layer 16, the sealant layer-forming resin composition is preferred to further contain a dispersant. In this case, the dispersant can enhance the dispersibility of the layered clay mineral filler, and at the same time can easily suppress deterioration in performance (e.g., adhesion strength, sealing strength, etc.) of the sealant layer 16.

As the dispersant, a surfactant such as a metal soap (e.g., zinc stearate), for example, may be used. If the resin comprises a modified polyolefin resin, the modified polyolefin resin can function as a dispersant. If the sealant layer-forming resin composition containing a layered clay mineral filler is liquid at room temperature, the layered clay mineral filler is preferred to be dispersed using a dispersion device such as a bead mill, from the perspective of improving dispersibility of the layered clay mineral filler. If the sealant layer-forming resin composition containing a layered clay mineral filler is solid at room temperature, a dispersion device such as a kneader that dissolves and disperses the sealant layer-forming resin composition is preferred to be used to disperse the layered clay mineral filler.

The average particle size of the layered clay mineral filler in the sealant layer-forming resin composition, although not especially limited, is preferred to be 20 µm or less. If the average particle size of the layered clay mineral filler is 20 µm or less, the dispersed state of the layered clay mineral filler can be maintained satisfactorily. The average particle size of the layered clay mineral filler is more preferred to be 10 µm or less, and is especially preferred to be 5 µm or less. The average particle size of the layered clay mineral filler is preferred to be 0.01 µm or more. In this case, cohesion between particles is less likely to occur, and aggregates are less likely to be formed during dispersion, stabilizing the average particle size, compared to the case where the average particle size of the layered clay mineral filler is less than 0.01 µm.

The average particle size can be obtained by capturing an image of a plurality of filler particles with magnification using an electron microscope, determining the size of each filler particle by image analysis, and calculating an average of the particle sizes. The size of each filler particle is specifically based on an area S of each filler particle obtained from image analysis in terms of an area of a circle, and is calculated by multiplying a radius r (r=(S/π)^{1/2}) of the area S of the circle by 2.

### (Step of aging)

In the present step, the laminate is aged (cured). Aging of the laminate can expedite adhesion between the barrier layer 13 / second anticorrosion treatment layer 14b / second adhesive layer 12b / sealant layer 16. Aging may be performed at a temperature in the range of room temperature to 100°C. The period of time of aging may be, for example, 1 to 10 days.

Through the processing described above, the packaging material 10 of the present embodiment as shown in Fig. 1 can be prepared.

Next, an example of a method of producing the packaging material 20 shown in Fig. 2 will be described. The method of producing the packaging material 20 should not be limited to the method described below.

The method of producing the packaging material 20 of the present embodiment includes a step of providing the anticorrosion treatment layers 14a and 14b to the barrier layer 13, a step of bonding the substrate layer 11 to the barrier layer 13 using the first adhesive layer 12a, a step of preparing a laminate by further laminating the adhesive resin layer 15 and the sealant layer 16, and, as necessary, a step of heat-treating the obtained laminate. Steps up to the step of bonding the substrate layer 11 to the barrier layer 13 can be performed as in the method of producing the packaging material 10.

### (Step of laminating adhesive resin layer 15 and sealant layer 16)

In the present step, the adhesive resin layer 15 and the sealant layer 16 are formed on the second anticorrosion treatment layer 14b that has been formed in the previous steps. The method may include sandwich-laminating the adhesive resin layer 15 together with the sealant layer 16 using an extrusion laminator. Furthermore, the adhesive resin layer 15 and the sealant layer 16 may be extruded and laminated using a tandem lamination method or a co-extrusion method. When forming the adhesive resin layer 15 and the sealant layer 16, the adhesive resin layer-forming resin composition and the sealant layer-forming resin composition mentioned above are used, for example.

When forming the adhesive resin layer 15, a masterbatch may be prepared in advance by mixing a resin with a layered clay mineral filler, and the adhesive resin layer-forming resin composition, which is obtained by mixing the masterbatch when extrusion-laminated with the above base resin, may be used.

In this case, the base resin used may be a resin, for example, whose properties such as MFR are substantially the same as those of the resin contained in the masterbatch.

The resin mixed with the layered clay mineral filler when preparing a masterbatch may be a modified polyolefin resin. The modified polyolefin resin is particularly preferred to be an acid-modified polyolefin resin from the perspective of improving dispersibility for the base resin.

The concentration of the masterbatch in the adhesive resin layer-forming resin composition may be, for example, 5 to 50 mass%. If the concentration of the masterbatch in the adhesive resin layer-forming resin composition is 5 mass% or more, the masterbatch can be uniformly dispersed in the adhesive resin layer 15. If the concentration of the masterbatch in the adhesive rein layer-forming resin composition is 50 mass% or less, the masterbatch can be sufficiently dispersed by kneading during extrusion, and problems such as film breakage are less likely to occur.

Furthermore, when forming the adhesive resin layer 15, the adhesive resin layer-forming resin composition is preferred to further contain a dispersant. In this case, the dispersant can enhance the dispersibility of the layered clay mineral filler, and at the same time can easily suppress deterioration in performance (e.g., adhesion strength, etc.) of the adhesive resin layer 15.

As the dispersant, a surfactant such as a metal soap (e.g., zinc stearate), for example, may be used. If the resin comprises a modified polyolefin resin, the modified polyolefin resin can function as a dispersant. If the adhesive resin layer-forming resin composition containing a layered clay mineral filler is liquid at room temperature, the layered clay mineral filler is preferred to be dispersed using a dispersion device such as a bead mill, from the perspective of improving dispersibility of the layered clay mineral filler. If the adhesive resin layer-forming resin composition containing a layered clay mineral filler is solid at room temperature, a dispersion device such as a kneader that dissolves and disperses the adhesive resin layer-forming resin composition is preferred to be used to disperse the layered clay mineral filler.

The average particle size of the layered clay mineral filler in the adhesive resin layer-forming resin composition, although not especially limited, is preferred to be 20 µm or less. If the average particle size of the layered clay mineral filler is 20 µm or less, the dispersed state of the layered clay mineral filler can be maintained satisfactorily. The average particle size of the layered clay mineral filler is more preferred to be 10 µm or less, and is especially preferred to be 5 µm or less. The average particle size of the layered clay mineral filler is preferred to be 0.01 µm or more. In this case, cohesion between particles is less likely to occur, stabilizing the average particle size, compared to the case where the average particle size of the layered clay mineral filler is less than 0.01 µm.

The method of forming the sealant layer 16 is similar to the method of forming the sealant layer 16 in the method of forming the packaging material 10.

Through the present step, a laminate as shown in Fig. 2 can be obtained in which layers are laminated in the order of the substrate layer 11 / first adhesive layer 12a / first anticorrosion treatment layer 14a / barrier layer 13 / second anticorrosion treatment layer 14b / adhesive resin layer 15 / sealant layer 16.

It should be noted that the adhesive resin layer 15 may be laminated by directly extruding and laminating materials that have been dry-blended with the above material formulation, using an extrusion laminator. Alternatively, the adhesive resin layer 15 may be laminated by melt-blending materials in advance using a melt kneader, such as a single screw extruder, twin screw extruder or Brabender mixer to produce granules, and extruding the granules using an extrusion laminator.

The sealant layer 16 may be laminated by directly extruding and laminating materials that have been dry-blended with the above material formulation as a component of the sealant layer-forming resin composition, using an extrusion laminator. Alternatively, the adhesive resin layer 15 and the sealant layer 16 may be laminated using a tandem lamination method or a coextrusion method in which materials are melt-blended in advance using a melt kneader, such as a single screw extruder, twin screw extruder or Brabender mixer to produce granules, and the granules are extruded. Alternatively, the sealant layer 16 may be laminated using a method in which a single sealant film is prepared in advance as a cast film using a sealant layer-forming resin composition, and the film is sandwich-laminated together with an adhesive resin. From the perspective of productivity, the formation rate (processing rate) of the adhesive resin layer 15 and the sealant layer 16 can be, for example, 80 m/min or more.

### (Step of heat treatment)

In the present step, the laminate is heat-treated. Heat treatment of the laminate can improve adhesion between the barrier layer 13 / second anticorrosion treatment layer 14b / adhesive resin layer 15 / sealant layer 16. In the method, heat treatment is preferred to be performed at least at a temperature of a melting point of the adhesive resin layer 15 or higher.

Through the processing described above, the packaging material 20 of the present embodiment as shown in Fig. 2 can be prepared.

Preferred embodiments of the present disclosure have been described in detail so far, but the present disclosure should not be limited to these specific embodiments. For example, in the packaging material 10, both of the second adhesive layer 12b and the sealant layer 16 comprise respective filler-containing layers that contain a layered clay mineral filler; however, in the packaging material 10, at least either of the second adhesive layer 12b and the sealant layer 16 may comprise a filler-containing layer containing a layered clay mineral filler, or only one of the second adhesive layer 12b and the sealant layer 16 may comprise a filler-containing layer. Also, in the packaging material 20, although both of the adhesive resin layer 15 and the sealant layer 16 comprise respective filler-containing layers that contain a layered clay mineral filler, only one of the adhesive resin layer 15 and the sealant layer 16 may comprise a filler-containing layer.

Since the packaging materials 10 and 20 described above can improve moisture barrier properties, they can be applied not only to solid-state batteries in which the electrolyte is solid, but also to power storage devices in which the electrolyte is liquid.

### [Power storage device]

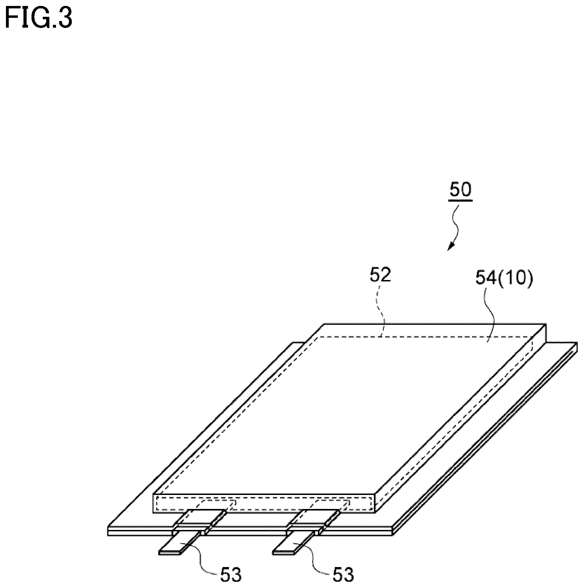

Referring to Fig. 3, a power storage device according an embodiment of the present disclosure will be described. Fig. 3 is a perspective view illustrating a power storage device according to an embodiment of the present disclosure.

As shown in Fig. 3, a power storage device 50 is constituted of a battery element 52, two metal terminals (current output terminals) 53 extending from the battery element 52 to externally output current, and a packaging bag 54 sandwiching the metal terminals 53 and hermetically accommodating the battery element 52.

The packaging bag 54 includes the packaging material 10. In the packaging material 10, the substrate layer 11 is the outermost layer and the sealant layer 16 is the innermost layer. The packaging bag 54 is formed by folding a single packaging material 10 into two so that the substrate layer 11 is located on the outside of the power storage device 50 and the sealant layer 16 is located on the inside of the power storage device 50, and heat-sealing the periphery of the folded packaging material, or by overlapping two packaging materials 10 and heat-sealing the periphery of the overlapped packaging materials.

The metal terminals 53 are sandwiched by and sealed in the packaging bag 54 forming a container with the sealant layer 16 located inside. The metal terminals 53 may be sandwiched between surfaces of the packaging material(s) 10 via tab sealants.

According to the power storage device 50, moisture barrier properties can be improved in the packaging material(s) 10, thereby suppressing penetration of moisture into the packaging bag 54, and thus suppressing deterioration in performance of the battery element 52 accommodated inside the packaging bag 54.

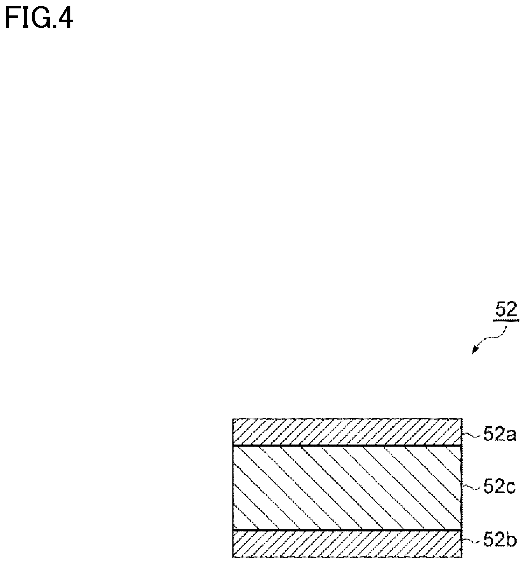

As shown in Fig. 4, the battery element 52 includes a positive electrode 52a, a negative electrode 52b, and an electrolyte 52c. The electrolyte 52c is located at least between the positive electrode 52a and the negative electrode 52b.

The electrolyte 52c may be a liquid electrolyte or may be a solid electrolyte. The solid electrolyte may be an oxide solid electrolyte or a sulfide solid electrolyte.

The power storage device 50 is particularly useful when the electrolyte 52c is a solid electrolyte, and the solid electrolyte is a sulfide solid electrolyte. **In** this case, due to the packaging material(s) 10 being able to improve moisture barrier properties thereof, penetration of moisture into the packaging bag 54 can be suppressed. This can suppress generation of hydrogen sulfide due to the sulfur in the sulfide solid electrolyte reacting with moisture.

The metal terminals 53, which are part of a current collector externally drawn out of the packaging material(s) 10, are formed of metal foils such as copper foils or aluminum foils.

In the power storage device 50, the packaging material(s) 20 may be used instead of the packaging material(s) 10.

### Examples

The present disclosure will be more specifically described below based on examples; however, the present disclosure should not be limited to the following examples.

### [Materials used]

Materials used in examples and comparative example are shown below.

### <Substrate layer (thickness: 15 µm)>

Nylon (Ny) film (manufactured by Toyobo Co., Ltd.) was used.

### <First adhesive layer-forming resin composition>

A polyurethane adhesive (manufactured by Toyo Ink Co., Ltd.) containing a polyester polyol-based main resin and a tolylene diisocyanate adduct-based curing agent was used as the first adhesive layer-forming resin composition.

### <Materials used for forming first anticorrosion treatment layer (substrate layer side) and second anticorrosion treatment layer (sealant layer side)>

The following (CL-1) and (CL-2) were used as materials for forming the first anticorrosion treatment layer (substrate layer side) and the second anticorrosion treatment layer (sealant layer side).
(CL-1): Sodium polyphosphate-stabilized cerium oxide sol obtained by adjusting the solid content concentration to 10 mass% using distilled water as a solvent
   The sodium polyphosphate-stabilized cerium oxide sol was obtained by mixing 10 parts by mass of Na salt of phosphoric acid into 100 parts by mass of cerium oxide.
(CL-2): Composition comprising 90 mass% of polyallylamine (manufactured by Nitto Boseki Co., Ltd) obtained by adjusting the solid content concentration to 5 mass% using distilled water as a solvent, and 10 mass% of polyglycerol polyglycidyl ether (manufactured by Nagase Chemtex Corp.)

### <Barrier layer (thickness: 40 µm)>

An annealed and degreased soft aluminum foil (8079 Material manufactured by Toyo Aluminum K.K.) was used.

### <Adhesive layer-forming resin composition>

As adhesive layer-forming resin compositions, a second adhesive layer-forming resin composition and an adhesive resin layer-forming resin composition were prepared as follows.

### (Second adhesive layer-forming resin composition)

The second adhesive layer-forming resin composition was prepared as follows.

Specifically, the following filler was dispersed, as necessary, in a solvent comprising methylcyclohexane and methyl ethyl ketone, followed by addition of the following acid-modified polyolefin resin-containing liquid, polyfunctional isocyanate compound-containing liquid, and carbodiimide compound-containing liquid.

### (1) Acid-modified polyolefin resin-containing liquid

Manufactured by Nippon Paper Industries Co., Ltd., product name: 150S, acid-modified polyolefin resin: maleic anhydride-modified polypropylene

### (2) Polyfunctional isocyanate compound-containing liquid

Manufactured by Tosoh Corporation, product name: Coronate HXR, multifunctional isocyanate compound: hexamethylene diisocyanate (HDI)-based polyisocyanurate resin

### (3) Carbodiimide compound-containing liquid

Manufactured by Nisshinbo Chemical Inc., product name: V-03

### (4) Layered clay mineral filler

A: Esben NZ (product name, manufactured by Nihon Yuukinendo., Co., Ltd., quaternary ammonium-modified montmorillonite, average particle size: 1 µm)
A: Esben NZ70 (product name, manufactured by Nihon Yuukinendo., Co., Ltd., quaternary ammonium-modified montmorillonite, average particle size: 1 µm)
C: Esben NX (product name, manufactured by Nihon Yuukinendo., Co., Ltd., quaternary ammonium-modified montmorillonite, average particle size: 1 µm)
D: Zeolite (manufactured by Sinanen Zeomic Co., Ltd, product name: DUSHLITE ZH, average particle size: 1 µm)

In the second adhesive layer-forming resin composition, the content of the filler in the solid content was as shown in Table 1. In Table 1, % refers to mass%. The types of filler used were as shown in Table 1.

In the solid content, the mass ratio of the acid-modified polyolefin resin, polyfunctional isocyanate compound, and carbodiimide compound was adjusted to 100: 1: 1.

### (Adhesive resin layer-forming resin composition)

Using a twin-screw extruder, an adhesive resin layer-forming resin composition was prepared, which contained an adhesive resin (random polypropylene (PP)-based acid-modified polypropylene resin composition, manufactured by Mitsui Chemicals, Inc.) and a type of filler shown in Table 1. The content of the filler in the adhesive resin layer-forming resin composition was as shown in Table 1. In Table 1, % refers to mass%.

### <Sealant layer-forming resin composition>

Using a twin-screw extruder, a sealant layer-forming resin composition was prepared, which contained a polypropylene-polyethylene random copolymer (manufactured by Prime Polymer Co., Ltd., product name: F744NP) and a type of filler shown in Table 1. The content of the filler in the solid content of the sealant layer-forming resin composition was as shown in Table 1. In Table 1, % refers to mass%.

### [Preparation of packaging material]

### <Examples 1 and 3 to 16>

First and second anticorrosion treatment layers were provided to the barrier layer through the following procedure. Specifically, (CL-1) was applied to both sides of the barrier layer by micro gravure coating at a dry coating amount of 70 mg/m², followed by baking at 200°C in a drying unit. Next, (CL-2) was applied to the obtained layer by micro gravure coating at a dry coating amount of 20 mg/m² to form composite layers as first and second anticorrosion treatment layers each constituted of a layer of (CL-1) and a layer of (CL-2). The composite layers were ensured to exhibit anticorrosion performance by combining the two materials (CL-1) and (CL-2).

Next, the first anticorrosion treatment layer side of the barrier layer provided with the first and second anticorrosion treatment layers was bonded to the substrate layer by dry lamination using the polyurethane adhesive (first adhesive layer-forming resin composition). The lamination between the barrier layer and the substrate layer was performed by applying the polyurethane adhesive to the surface of the first anticorrosion treatment layer facing away from the barrier layer so that the cured thickness would be 5 µm, followed by drying the coating for 1 minute at 80°C, laminating the substrate layer thereto, and aging the laminate for 72 hours at 60°C. In this way, a first laminate including a barrier layer and a substrate layer was obtained.

Subsequently, the first laminate obtained as described above was set at the unwinding part of an extrusion laminator, and the second adhesive layer-forming resin composition, in which the type and content of the filler were as shown in Table 1, was applied to the second anticorrosion treatment layer so that the cured thickness would be 5 µm, followed by drying the coating for 1 minute at 100°C, laminating a sealant layer for dry lamination thereto, and aging the laminate for 72 hours at 40°C. In this case, the sealant layer for dry lamination used was a sealant layer in which an inner sealant layer (thickness: 40 µm) and an outer sealant layer (thickness: 40 µm) were laminated in this order. The sealant layer for dry lamination was prepared by coextruding the inner sealant layer-forming resin composition and the outer sealant layer-forming resin composition, in each of which the type and content of the filler were as shown in Table 1, under processing conditions of 270°C and 100 m/min.

Through the method described above, a packaging material (substrate layer / first adhesive layer / first anticorrosion treatment layer / barrier layer / second anticorrosion treatment layer / second adhesive layer / inner sealant layer / outer sealant layer) was prepared.

### (Example 2)

A first laminate including a barrier layer and a substrate layer was obtained as in Example 1.

Subsequently, the first laminate obtained as described above was set at the unwinding part of an extrusion laminator, and the adhesive resin composition, the inner sealant layer-forming resin composition, and the outer sealant layer-forming resin composition, in each of which the type and content of the filler were as shown in Table 1, were coextruded under processing conditions of 270°C and 100 m/min to laminate an adhesive resin layer (thickness: 20 µm), an inner sealant layer (thickness: 30 µm), and an outer sealant layer (thickness: 30 µm) in this order, thereby obtaining a second laminate.

The second laminate obtained in this way was subjected to heat treatment so that the maximum temperature reached would be 190°C. In this way, a packaging material (substrate layer / first adhesive layer / first anticorrosion treatment layer / barrier layer / second anticorrosion treatment layer / adhesive layer / inner sealant layer / outer sealant layer) was prepared.

### (Comparative Example 1)

A packaging material (substrate layer / first adhesive layer / first anticorrosion treatment layer / barrier layer / second anticorrosion treatment layer / second adhesive layer / inner sealant layer /outer sealant layer) was prepared as in Example 1, except that the second adhesive layer was formed using the second adhesive layer-forming resin composition, in which the type and content of the filler were as shown in Table 1.

### (Comparative Example 2)

A packaging material (substrate layer / first adhesive layer / first anticorrosion treatment layer / barrier layer / second anticorrosion treatment layer / adhesive layer / inner sealant layer / outer sealant layer) was prepared as in Example 2, except that the adhesive resin layer was formed using the adhesive resin layer-forming resin composition, in which the type and content of the filler were as shown in Table 1.

### (Comparative Example 3)

A packaging material (substrate layer / first adhesive layer / first anticorrosion treatment layer / barrier layer / second anticorrosion treatment layer / second adhesive layer / inner sealant layer /outer sealant layer) was prepared as in Example 1, except that the second adhesive layer was formed using the second adhesive layer-forming resin composition, in which the type and content of the filler were as shown in Table 1.

### <Evaluation>

### (1) Sealing strength

### (1-1) Preparation of sealing strength measurement sample

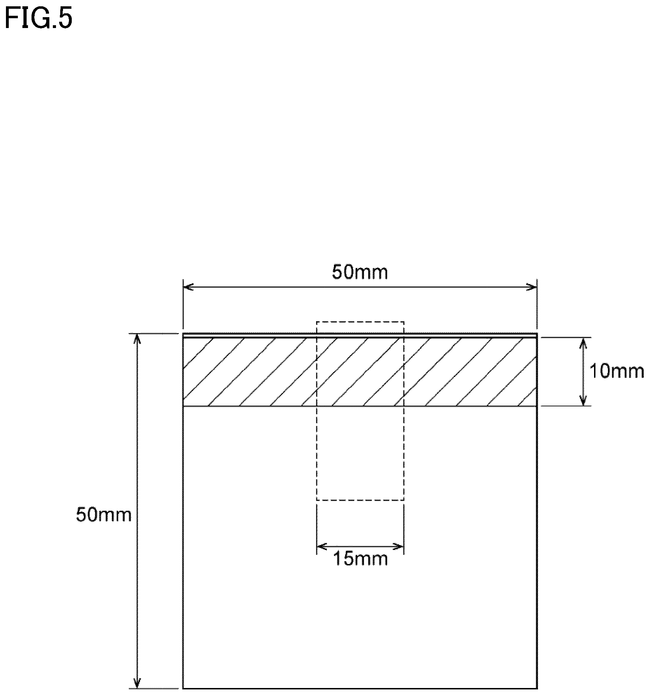

A sample obtained by cutting each packaging material to a size of 50 mm (TD) × 100 mm (MD) was folded in two so as to sandwich a chemically treated aluminum foil cut to a size of 50 mm × 50 mm, and the edge portion on the opposite side to the folded portion (fold) was heat-sealed at 180°C / 0.6 MPa / 10 sec with a width of 10 mm. Thereafter, the heat-sealed portion was cut to a width of 15 mm at the center portion thereof in the longitudinal direction (see Fig. 5) to prepare a sealing strength measurement sample.

### (1-2) Sealing strength (room temperature)

The sealing strength measurement sample prepared as described above was subjected to T-peel test for peeling off the packaging material from the chemically treated aluminum foil, using a tensile testing machine (manufactured by Shimadzu Corporation) at a tensile speed of 50 mm/min in room temperature (25°C) environment to measure the sealing strength.

### (1-3) Sealing strength (80°C)

The sealing strength measurement sample prepared as described above was left to stand for 5 minutes in a high temperature environment of 80°C. After that, the sealing strength measurement sample was subjected to T-peel test for peeling off the packaging material from the chemically treated aluminum foil, using a tensile testing machine (manufactured by Shimadzu Corporation) at a tensile speed of 50 mm/min to measure the sealing strength.

### (1-4) Evaluation

From the sealing strengths obtained in (1-2) and (1-3), sealing strength (burst strengths) were determined based on the following criteria. The results of the sealing strengths and evaluation are shown in Table 2.

### (Criteria)

A: Sealing strength was 20 N/15 mm or more.
B: Sealing strength was 15 N/15 mm or more and less than 20 N/15 mm.
C: Sealing strength was less than 15 N/15 mm.

### (2) Lamination strength

Each packaging material cut to a width of 15 mm and a length of 120 mm was subjected to T-peel test for peeling off the metal foil of the packaging material from the sealant layer, using a tensile testing machine (manufactured by Shimadzu Corporation) at a tensile speed of 50 mm/min in a room temperature environment to measure the lamination strength. From the lamination strength obtained, lamination strength was determined based on the following criteria. The results of the lamination strength and evaluation are shown in Table 2.

### (Criteria)

A: Lamination strength was 10 N/15 mm or more, or peeling was impossible.
B: Lamination strength was 3 N/15 mm or more and less than 10 N/15 mm.
C: Lamination strength was less than 3 N/15 mm.

### (3) Moisture barrier properties

Two sheets were cut out from each prepared packaging material, placed so that the sealant layers face each other, and heat-sealed on three sides so that the internal size of the bag would be 100 mm × 45 mm. 3 g of lithium salt-free electrolyte was injected into the bag from the open side and then the open side was heat-sealed. After that, the bag was trimmed along the peripheral edge so that the heat-sealed width would be 5 mm, and left to stand for 1 day in an environment of 40°C and 90%RH (relative humidity). After that, water content in the encapsulated electrolyte was measured using a Karl Fischer moisture meter to calculate the amount of water permeated based on the measured water content. Based on the obtained water content, moisture barrier properties were evaluated based on the following criteria. The results of the water content and evaluation are shown in Table 2.

### (Criteria)

Excellent: Moisture permeability was less than 10⁻² g/m²·day.
Good: Moisture permeability was less than 10⁻¹ g/m²·day and 10⁻² g/m²·day or more.
Poor: Moisture permeability was 10⁻¹ g/m²·day or more.

**[Table 1]**

| | Adhesive layer | | | | | | | Sealant layer | | | | Content in entire sealant layer |
|---|---|---|---|---|---|---|---|---|---|---|---|---|
| | Type | Polyfunctional isocyanate compound contained? | Carbodiimide compound contained? | 2^{nd} adhesive layer-forming RC | | Adhesive resin layer-forming RC | | Sealant layer-forming RC | | | | |
| | | | | | | | | Inside | | Outside | | |
| | | | | Filler | | Filler | | Filler | | Filler | | |
| | | | | Co | T | Co | T | Co | T | Co | T | |
| Ex. 1 | Ad | - | - | 5% | A | - | | - | - | - | - | - |
| Ex. 2 | AdR | - | - | - | - | 5% | C | - | - | - | - | - |
| Ex. 3 | Ad | Yes | - | 5% | A | - | - | - | - | - | - | - |
| Ex. 4 | Ad | Yes | Yes | 5% | A | - | - | - | - | - | - | - |
| Ex. 5 | Ad | Yes | Yes | - | - | - | - | 5% | C | 5% | C | 5.0% |
| Ex. 6 | Ad | Yes | Yes | 5% | A | - | - | 5% | C | 5% | C | 5.0% |
| Ex. 7 | Ad | Yes | Yes | - | - | - | - | 5% | C | - | - | 2.5% |
| Ex. 8 | Ad | Yes | Yes | - | - | - | - | - | - | 5% | C | 2.5% |
| Ex. 9 | Ad | Yes | Yes | 5% | B | - | - | - | - | - | - | - |
| Ex. 10 | Ad | Yes | Yes | 1% | A | - | - | - | - | - | - | - |
| Ex. 11 | Ad | Yes | Yes | 20% | A | - | - | - | - | - | - | - |
| Ex. 12 | Ad | Yes | Yes | 40% | A | - | - | - | - | - | - | - |
| Ex. 13 | Ad | Yes | Yes | 50% | A | - | - | - | - | - | - | - |
| Ex. 14 | Ad | Yes | Yes | - | - | - | - | 20% | C | 20% | C | 20.0% |
| Ex. 15 | Ad | Yes | Yes | - | - | - | - | 40% | C | 40% | C | 40.0% |
| Ex. 16 | Ad | Yes | Yes | - | - | - | - | 50% | C | 50% | C | 50.0% |
| Co. Ex. 1 | Ad | Yes | Yes | - | - | - | - | - | - | - | - | - |
| Co. Ex. 2 | AdR | - | - | - | - | - | - | - | - | - | - | - |
| Co. Ex. 3 | Ad | Yes | Yes | - | - | 5% | D | - | - | - | - | - |

| | | | | | | | | | | | | |
|---|---|---|---|---|---|---|---|---|---|---|---|---|
| Ad: Adhesive AdR: Adhesive Resin RC: Resin Composition Co: Content T: Type | | | | | | | | | | | | |

**[Table 2]**

| | Evaluation | | | | | | | |
|---|---|---|---|---|---|---|---|---|
| | Sealing strength | | | | Lamination strength | | Moisture barrier properties | |
| | Room temperature | | 80°C | | | | Evalu-ation | Water content |
| | Evaluation | N/15 mm | Evaluation | N/15 mm | Evaluation | N/15 mm | | g/m²·day |
| Ex. 1 | B | 16 | C | 8 | A | 10 | Good | 0.090 |
| Ex. 2 | A | 30 | A | 23 | A | Unpeelable | Excellent | 0.008 |
| Ex. 3 | A | 26 | B | 17 | A | Unpeelable | Good | 0.030 |
| Ex. 4 | A | 28 | A | 22 | A | Unpeelable | Excellent | 0.010 |
| Ex. 5 | A | 29 | A | 23 | A | Unpeelable | Excellent | 0.009 |
| Ex. 6 | A | 28 | A | 23 | A | Unpeelable | Excellent | 0.004 |
| Ex. 7 | A | 29 | A | 23 | A | Unpeelable | Good | 0.020 |
| Ex. 8 | A | 29 | A | 22 | A | Unpeelable | Good | 0.013 |
| Ex. 9 | A | 28 | A | 23 | A | Unpeelable | Excellent | 0.010 |
| Ex. 10 | A | 30 | A | 22 | A | Unpeelable | Good | 0.034 |
| Ex. 11 | A | 25 | A | 24 | A | 11 | Excellent | 0.008 |
| Ex. 12 | A | 22 | A | 22 | B | 8 | Excellent | 0.007 |
| Ex. 13 | B | 18 | B | 18 | B | 5 | Excellent | 0.006 |
| Ex. 14 | A | 26 | A | 21 | A | Unpeelable | Excellent | 0.007 |
| Ex. 15 | A | 20 | B | 18 | A | Unpeelable | Excellent | 0.005 |
| Ex. 16 | B | 17 | C | 11 | A | Unpeelable | Excellent | 0.005 |
| Co. Ex. 1 | A | 28 | B | 19 | A | Unpeelable | Poor | 0.230 |
| Co. Ex. 2 | A | 30 | A | 21 | A | Unpeelable | Poor | 0.110 |
| Co. Ex. 3 | A | 27 | B | 19 | A | Unpeelable | Poor | 0.400 |

As can be seen from the results shown in Tables 1 and 2, evaluation for moisture barrier properties was Excellent or Good in Examples 1 to 16, while evaluation for moisture barrier properties was Poor in Comparative Examples 1 to 3.

As described above, according to the packaging material for a power storage device of the present disclosure, it was confirmed that moisture barrier properties could be improved.

The present disclosure can be summarized as follows.
[1] A packaging material for a power storage device, including at least a substrate layer, a barrier layer, an adhesive layer, and a sealant layer in this order, wherein at least either of the adhesive layer and the sealant layer includes a filler-containing layer that contains a filler containing layered clay minerals.
[2] The packaging material for a power storage device according to [1], wherein the filler-containing layer is obtained using a resin composition containing a resin and the filler.
[3] The packaging material for a power storage device according to [2], wherein, of the adhesive layer and the sealant layer, the adhesive layer includes the filler-containing layer, and the resin in the resin composition comprises a modified polyolefin resin.
[4] The packaging material for a power storage device according to [3], wherein the resin composition further contains a polyfunctional isocyanate compound.
[5] The packaging material for a power storage device according to any of [2] to [4], wherein the resin composition further contains a carbodiimide compound.
[6] The packaging material for a power storage device according to any of [1] to [5], wherein the layered clay minerals contain an organically modified montmorillonite.
[7] The packaging material for a power storage device according to [6], wherein the organically modified montmorillonite comprises a quaternary ammonium-modified montmorillonite.
[8] The packaging material for a power storage device according to [3], wherein the modified polyolefin resin comprises an acid-modified polyolefin resin.
[9] The packaging material for a power storage device according to [4], wherein the polyfunctional isocyanate compound comprises an isocyanurate-type polyfunctional isocyanate compound.
[10] The packaging material for a power storage device according to any of [2] to [9], wherein a content of the filler in the resin composition is 0.1 to 40 mass%.
[11] The packaging material for a power storage device according to any of [1] to [10], wherein one side or each of both sides of the barrier layer is further provided with an anticorrosion treatment layer.
[12] The packaging material for a power storage device according to any of [1] to [11], wherein the power storage device is a solid-state battery.
[13] The packaging material for a power storage device according to [12], wherein the solid-state battery contains a sulfide solid electrolyte.
[14] A power storage device including a battery element and a packaging bag accommodating the battery element, wherein the packaging bag includes the packaging material for a power storage device according to any of [1] to [11].
[15] The power storage device according to [14], wherein the power storage device is a solid-state battery.
[16] The packaging material for a power storage device according to [15], wherein the battery element contains a sulfide solid electrolyte.

### [Industrial Applicability]

According to the packaging material for a power storage device of the present disclosure, moisture barrier properties can be improved, and therefore it can be applied to power storage devices such as solid-state batteries.

### [Reference Signs List]

- 10, 20: Packaging material (packaging material for power storage device)
- 11: Substrate layer
- 12b: Second adhesive layer (adhesive layer)
- 13: Barrier layer
- 14a: First anticorrosion treatment layer
- 14b: Second anticorrosion treatment layer
- 15: Adhesive resin layer (adhesive layer)
- 16: Sealant layer
- 50: Power storage device
- 52: Battery element
- 52c: Electrolyte (solid electrolyte)
- 54: Packaging bag

## Claims

1. A packaging material for a power storage device comprising at least a substrate layer, a barrier layer, an adhesive layer, and a sealant layer in this order, wherein
at least either of the adhesive layer and the sealant layer includes a filler-containing layer that contains a filler containing layered clay minerals.

2. The packaging material for a power storage device according to claim 1, wherein the filler-containing layer is obtained using a resin composition containing a resin and the filler.

3. The packaging material for a power storage device according to claim 2, wherein, of the adhesive layer and the sealant layer, the adhesive layer includes the filler-containing layer, and the resin in the resin composition comprises a modified polyolefin resin.

4. The packaging material for a power storage device according to claim 3, wherein the resin composition further contains a polyfunctional isocyanate compound.

5. The packaging material for a power storage device according to claim 4, wherein the resin composition further contains a carbodiimide compound.

6. The packaging material for a power storage device according to claim 1, wherein the layered clay minerals contain an organically modified montmorillonite.

7. The packaging material for a power storage device according to claim 6, wherein the organically modified montmorillonite comprises a quaternary ammonium-modified montmorillonite.

8. The packaging material for a power storage device according to claim 3, wherein the modified polyolefin resin comprises an acid-modified polyolefin resin.

9. The packaging material for a power storage device according to claim 4, wherein the polyfunctional isocyanate compound comprises an isocyanurate-type polyfunctional isocyanate compound.

10. The packaging material for a power storage device according to claim 2, wherein a content of the filler in the resin composition is 0.1 to 40 mass%.

11. The packaging material for a power storage device according to claim 1, wherein one side or each of both sides of the barrier layer is further provided with an anticorrosion treatment layer.

12. The packaging material for a power storage device according to claim 1, wherein the power storage device is a solid-state battery.

13. The packaging material for a power storage device according to claim 12, wherein the solid-state battery contains a sulfide solid electrolyte.

14. A power storage device comprising
a battery element; and
a packaging bag accommodating the battery element, wherein
the packaging bag includes the packaging material for a power storage device according to any one of claims 1 to 11.

15. The power storage device according to claim 14, wherein the power storage device is a solid-state battery.

16. The power storage device according to claim 15, wherein the battery element contains a sulfide solid electrolyte.
